(19) Europäisches Patentamt
European Patent Office
Office européen des brevets

(11) Veröffentlichungsnummer: **0 023 309**
**A1**

(12) # EUROPÄISCHE PATENTANMELDUNG

(21) Anmeldenummer: **80104093.2**

(22) Anmeldetag: **15.07.80**

(51) Int. Cl.³: **C 09 B 31/14**
D 06 P 1/18, D 06 P 3/60
D 06 P 3/85

(30) Priorität: **26.07.79 DE 2930334**

(43) Veröffentlichungstag der Anmeldung:
**04.02.81 Patentblatt 81/5**

(84) Benannte Vertragsstaaten:
**AT BE CH DE FR GB IT LI LU NL SE**

(71) Anmelder: **BASF Aktiengesellschaft**
**Carl-Bosch-Strasse 38**
**D-6700 Ludwigshafen(DE)**

(72) Erfinder: **Loeffler, Hermann**
**Haydnstrasse 23**
**D-6720 Speyer(DE)**

(72) Erfinder: **Dehnert, Johannes, Dr.**
**Ottweilerstrasse 2**
**D-6700 Ludwigshafen(DE)**

(54) **Disazofarbstoffe der Aminopyridin- oder Aminopyrimidinreihe sowie ihre Verwendung beim Färben cellulosehaltigen Textilmaterials.**

(57) Die Erfindung betrifft Disazofarbstoffe mit heterocyclischen Kupplungskomponenten der allgemeinen Formel

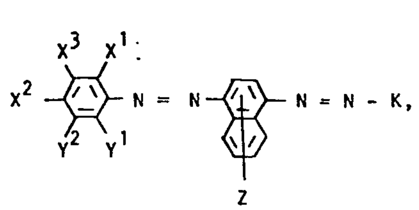

in der K ein Rest der Formel

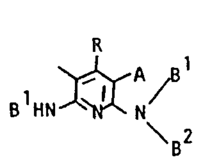

oder

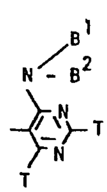

ist,
einer der Reste
$X^1$ und $X^2$ Nitro, Methylsulfonyl, Äthylsulfonyl, gegebenenfalls substituiertes Carbamoyl oder Sulfamoyl, Carbonester oder einen gegebenenfalls substituierten Sulfonsäurephenylesterrest, der andere der Reste $X^1$ und $X^2$ Wasserstoff, Fluor, Chlor, Brom, Methyl, Trifluoromethyl, Methoxy, Nitro oder Cyan, $X^3$ Wasserstoff oder zusammen mit $X^1$ oder $X^2$ einen Rest der Formel

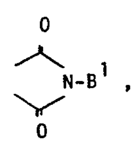

Z Wasserstoff, Methyl, Äthyl, Methoxy, Äthoxy, Chlor oder Brom,
$Y^1$ Wasserstoff, Chlor, Brom, Methyl oder Cyan,
$Y^2$ Wasserstoff, Chlor, Brom oder Methoxy,
A Cyan oder Carbamoyl,
R Wasserstoff oder $C_1$- bis $C_3$-Alkyl, die Reste

./...

EP 0 023 309 A1

Croydon Printing Company Ltd.

$B^1$ unabhängig von einander Wasserstoff oder einen aliphatischen, cycloaliphatischen, araliphatischen oder aromatischen Rest,

$B^2$ Wasserstoff oder gegebenenfalls substituiertes Alkyl und

$B^1$ und $B^2$ zusammen mit dem Stickstoff einen gesättigten 5- bis 7-Ring, einer der Reste T einen Rest der Formel

$$-\underset{B^2}{\underset{|}{N}}-B^1$$

und der andere Rest T Wasserstoff $C_1$-bis $C_3$-Alkyl oder Phenyl bedeuten,

sowie deren Verwendung zum Färben von Cellulosehaltigem Textilmaterial.

BEZEICHNUNG GEÄNDERT
siehe Titelseite

# Diazofarbstoffe mit heterocyclischen Kupplungskomponenten

Die Erfindung betrifft Farbstoffe der allgemeinen Formel I

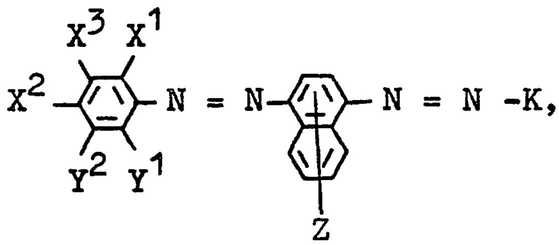

in der K ein Rest der Formel

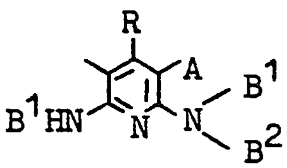

oder

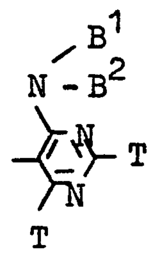

ist,

einer der Reste $X^1$ und $X^2$ Nitro, Methylsulfonyl, Äthylsulfonyl, gegebenenfalls substituiertes Carbamoyl oder Sulfamoyl, Carbonester oder einen gegebenenfalls substituierten Sulfonsäurephenylesterrest, der andere der Reste $X^1$ und $X^2$ Wasserstoff, Fluor, Chlor, Brom, Methyl, Trifluormethyl, Methoxy, Nitro oder Cyan,

$X^3$ Wasserstoff oder zusammen mit $X^1$ oder $X^2$ einen Rest der Formel

Bg/BL

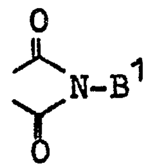 ,

Z Wasserstoff, Methyl, Äthyl, Methoxy, Äthoxy, Chlor oder Brom,

$Y^1$ Wasserstoff, Chlor, Brom, Methyl oder Cyan,

$Y^2$ Wasserstoff, Chlor, Brom oder Methoxy,

A Cyan oder Carbamoyl,

R Wasserstoff oder $C_1$- bis $C_3$-Alkyl, die Reste

$B^1$ unabhängig von einander Wasserstoff oder einen aliphatischen, cycloaliphatischen, araliphatischen oder aromatischen Rest,

$B^2$ Wasserstoff oder gegebenenfalls substituiertes Alkyl und

$B^1$ und $B^2$ zusammen mit dem Stickstoff einen gesättigten 5- bis 7-Ring, einer der Reste T einen Rest der Formel $\underset{B^2}{\underset{|}{N}}-B^1$ und der andere Rest T Wasserstoff $C_1$- bis $C_3$-Alkyl oder Phenyl bedeuten.

Die Carbamoyl- und Sulfamoylreste $X^1$ oder $X^2$ können z. B. durch $C_1$- bis $C_8$-Alkyl, das noch durch Hydroxy oder $C_1$- bis $C_4$-Alkoxy substituiert sein kann, Cyclohexyl, $C_7$- bis $C_{10}$-Aralkyl, Phenyl, Tolyl, Chlorphenyl oder Methoxyphenyl mono- oder disubstituiert sein. Die Carbonesterreste haben vorzugsweise insgesamt 2 bis 11 C-Atome und leiten sich von Alkanolen, Glykolen, Glykoläthern, Aralkanolen oder Phenolen ab. Die Sulfonsäurephenylester können im Phenyl z. B. noch durch Chlor, Brom, Methyl, Methoxy oder Äthoxy substituiert sein.

Einzelne Reste $X^1$ oder $X^2$ sind neben den bereits genannten z. B.:

$COOCH_3$, $COOC_2H_5$, $COOC_3H_7$, $COOC_4H_9$, $COOC_6H_{13}$, $COOC_8H_{17}$, 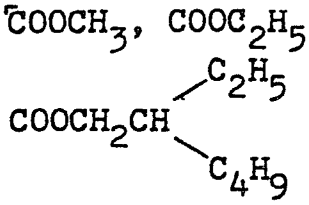, $COOC_{10}H_{21}$, $COOC_2H_4OCH_3$, $COOC_2H_4OC_2H_5$, $COOC_2H_4OC_4H_9$, $COOC_2H_4OC_6H_5$, $COOC_3H_6OH$, $COOC_3H_6OCH_3$, $COOC_3H_6OC_2H_5$, $COOC_6H_{12}OH$, $COOC_3H_6\text{-}O\text{-}C_4H_8\text{-}OH$, $COOC_6H_5$, $COOC_6H_4CH_3$, $COOC_6H_4OCH_3$, $CONHCH_3$, $CONHC_2H_5$, $CONHC_3H_7$, $CONHC_4H_9$, $CONHC_6H_{13}$, 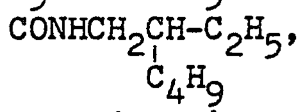, $CONHC_2H_4OCH_3$, $CON(CH_3)_2$, $CON(C_2H_5)_2$, $CON(C_3H_7)_2$, $CON(C_4H_9)_2$, 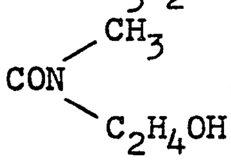, 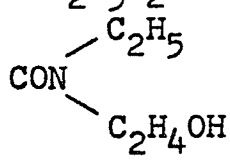, $CON(C_2H_4OCH_3)_2$, $CONHC_6H_5$, $CONHC_6H_4CH_3$, $CONHC_6H_4OCH_3$ oder $CON(C_2H_5)C_6H_5$.

Neben Wasserstoff kommen für $B^1$ z. B. die folgenden Substituenten in Betracht: Alkyl mit 1 bis 8 C-Atomen, Allyl, durch Hydroxy, Cyan, Alkoxy mit 1 bis 8 C-Atomen, Phenoxy, Phenoxyäthoxy oder Benzyloxy substituiertes $C_2$- bis $C_8$-Alkyl, Cyclohexyl, Norbornyl, Benzyl, Phenyläthyl, Phenylhydroxyäthyl, Phenylpropyl, Phenylbutyl, gegebenenfalls durch Chlor, Methyl, Trifluormethyl, Pyrrolidonyl, Methoxy oder Äthoxy substituiertes Phenyl, $C_5$- bis $C_{12}$-Polyalkoxyalkyl, $C_4$- bis $C_9$-Hydroxypolyalkoxyalkyl, $C_1$- bis $C_8$-Alkanoyloxy-$C_2$- bis $C_6$-alkyl, $C_7$- bis $C_{11}$-Aroyloxy-$C_2$-bis-$C_6$-alkyl, $C_1$- bis $C_8$-Alkylaminocarbonyloxy-$C_2$- bis $C_6$-alkyl, $C_6$- bis $C_{10}$-Arylaminocarbonyloxy-$C_2$- bis $C_6$-alkyl, $C_1$- bis $C_8$-Alkoxycarbonyl-$C_2$- bis $C_7$-alkyl, $C_1$- bis $C_{18}$-Alkanoyl, $C_8$- bis $C_{10}$-Aralkanoyl, $C_7$- bis $C_{11}$-Aroyl, $C_1$- bis $C_4$-Alkylsulfonyl oder $C_6$- bis $C_{10}$-Arylsulfonyl.

Als Reste $B^1$ kommen im einzelnen außer den schon genannten z. B. in Betracht:

1. gegebenenfalls substituierte Alkylreste:

$CH_3$, $C_2H_5$, n- oder i-$C_3H_7$, n- oder i-$C_4H_9$, $C_6H_{13}$, $CH_2\text{-}\underset{C_2H_5}{CH}\text{-}C_4H_9$, $(CH_2)_3OH$, $CH_2\underset{CH_3}{C}HOH$, $\underset{CH_3}{CH}\text{-}CH_2OH$, $(CH_2)_4OH$, $(CH_2)_6OH$, $\underset{CH_3}{CH}\text{-}(CH_2)_3\underset{OH}{C}(CH_3)_2$, $(CH_2)_3O(CH_2)_4OH$, $(CH_2)_2CN$, $(CH_2)_5CN$, $(CH_2)_6CN$, $(CH_2)_7CN$, $(CH_2)_2O(CH_2)_2CN$, $(CH_2)_3O(CH_2)_2CN$, $(CH_2)_2O(CH_2)_2O(CH_2)_2CN$, $(CH_2)_3O(CH_2)_2OCH_3$, $(CH_2)_3O(CH_2)_2OCH_2H_5$, $(CH_2)_3O(CH_2)_2OH$, $(CH_2)_3O(CH_2)_2OCH(CH_3)_2$, $(CH_2)_3O(CH_2)_2OC_4H_9$, $(CH_2)_3O(CH_2)_2OCH_2C_6H_5$, $(CH_2)_3O(CH_2)_2O(CH_2)_2C_6H_5$, $(CH_2)_3O(CH_2)_2O-\langle H \rangle$, $(CH_2)_3O(CH_2)_2OC_6H_5$, $(CH_2)_3O\underset{CH_3}{C}H\text{-}CH_2OCH_3$, $(CH_2)_3O\underset{CH_3}{C}HCH_2OC_4H_9$, $(CH_2)_3OCH_2\underset{CH_3}{C}HOCH_3$, $(CH_2)_3O\underset{CH_3}{C}HCH_2OC_2H_5$, die entsprechenden Reste, bei denen die Gruppierungen $-O(CH_2)_2-$, $-OCH_2\underset{CH_3}{C}H-$ oder $-O\underset{CH_3}{C}H\text{-}CH_2-$ zwei oder dreimal vorhanden sind:

$CH_2CH_2OCH_3$, $CH_2CH_2OC_2H_5$, $CH_2CH_2OC_3H_7$, $CH_2CH_2OC_4H_9$, $CH_2CH_2OC_6H_5$, $(CH_2)_3OCH_3$, $(CH_2)_3OC_2H_5$, $(CH_2)_3OC_3H_7$, $(CH_2)_3OC_4H_9$, $(CH_2)_3OCH_2\underset{C_2H_5}{C}HC_4H_9$, $(CH_2)_3OC_6H_{13}$, $(CH_2)_3OC_8H_{17}$, $(CH_2)_3OCH_2C_6H_5$, $(CH_2)_3OC_2H_4C_6H_5$, $(CH_2)_3OC_6H_5$, $-\underset{CH_3}{C}HCH_2OCH_3$, $\underset{CH_3}{C}HCH_2OC_4H_9$, $\underset{CH_3}{C}HCH_2OC_6H_5$, $\underset{CH_3}{C}HCH_2OCH_2C_6H_5$, $\underset{CH_3}{C}H_2CHOCH_3$, $\underset{CH_3}{C}H_2CH\text{-}OC_2H_5$, $CH_2\underset{CH_3}{C}H\text{-}OC_4H_9$, $CH_2\underset{CH_3}{C}H\text{-}OC_2H_4C_6H_5$, $CH_2\underset{CH_3}{C}H\text{-}OC_6H_5$, $CH_2-\langle H \rangle-CH_2OH$;

2. gegebenenfalls substituierte Cyclo- und Polycycloalkylreste:

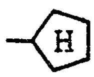 , 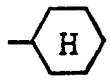 , 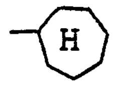 , 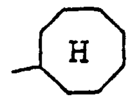 , 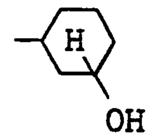 ,

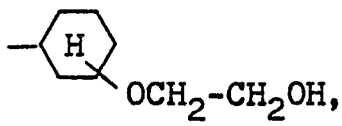 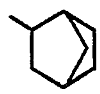 , 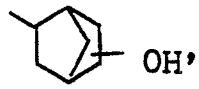 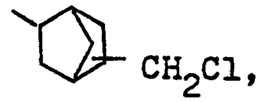

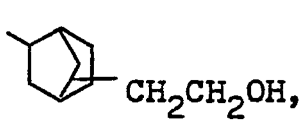 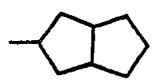 , 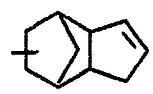 ,

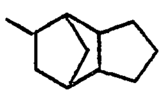 , 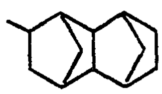 , 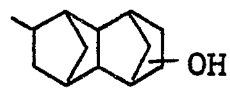

3. Aralkylreste:

$CH_2C_6H_5$, $C_2H_4C_6H_5$, $CH_2CH(CH_3)-C_6H_5$, $CH_2CH_2CH(CH_3)C_6H_5$, $CH_2CH(OH)-C_6H_5$ oder $C_6H_4CH_3$ anstelle von $C_6H_5$;

4. gegebenenfalls substituierte Phenylreste:

$C_6H_5$, $C_6H_4CH_3$, $C_6H_3(CH_3)_2$, $C_6H_4OCH_3$, $C_6H_4OC_2H_5$, $C_6H_4OCH_2CH_2OH$ oder $C_6H_4Cl$;

5. die Reste: $CH_2CH{=}CH_2$, $CH_2COOCH_3$, $(CH_2)_5COOCH_3$, $(CH_2)_5COOC_2H_5$, $(CH_2)_5COOC_4H_9$,

$(CH_2)_5COOCH_2CH(C_2H_5)(C_4H_9)$, $(CH_2)_n$-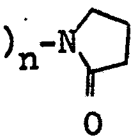, wobei n = 2, 3, 4 oder 6 ist.

6. Acyloxyreste: $(CH_2)_2OCHO$, $(CH_2)_2OCOCH_3$, $(C_2H_4O)_2CHO$, $(C_2H_4O)_2COCH_3$, $(CH_2)_2OCOC_3H_7$, $(CH_2)_2OCOCH(C_2H_5)(C_4H_9)$, $(CH_2)_2OCOC_6H_5$, $(CH_2)_2OCOC_6H_4CH_3$, $(CH_2)_2OCOC_6H_4Cl$, $(CH_2)_2OCOC_{10}H_7$, $(CH_2)_2OCONHCH_3$, $(CH_2)_2OCONHC_4H_9$, $(CH_2)_2OCONHCH_2CH(C_2H_5)(C_4H_9)$, $(CH_2)_2OCONHC_6H_5$, $(CH_2)_2OCONHC_6H_4Cl$, $(CH_2)_2OCONHC_6H_3Cl_2$, sowie die entsprechenden Reste mit jeweils $(CH_2)_3$, $(CH_2)_4$ oder $(CH_2)_6$ anstelle von $(CH_2)_2$.

7. Acylreste:
CHO, $CH_3CO$, $C_2H_5CO$, $C_3H_7CO$, $C_4H_9CH(C_2H_5)$-CO, $C_2H_5CO$, $CH_3C_6H_4CO$, $C_6H_5CH_2CO$, $C_6H_5OCH_2CO$, $CH_3SO_2$, $C_2H_5SO_2$, $C_6H_5SO_2$ oder $CH_3C_6H_4SO_2$.

Bevorzugte Substituenten sind beispielsweise: Wasserstoff, $C_2H_5$, n- oder i-$C_3H_7$, n- oder i-$C_4H_9$, $C_6H_{13}$, $(CH_2)_6OH$, $CH(CH_3)(CH_2)_3C(OH)(CH_3)_2$, $(CH_2)_3O(CH_2)_4OH$, $(CH_2)_3O(CH_2)_6OH$, $CH_2CH(OH)$-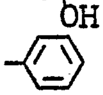, $CH_2CH_2OCH_3$, $CH_2CH_2OC_2H_5$, $CH_2CH_2OC_4H_9$, $(CH_2)_3OCH_3$, $(CH_2)_3OC_2H_5$, $(CH_2)_3OC_3H_7$, $(CH_2)_3OC_4H_9$, $(CH_2)_3$-O-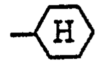, $(CH_2)_3$-$OCH_2$-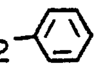, $(CH_2)_3O$-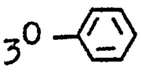,

$(CH_2)_2O$–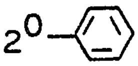, $(CH_2)_3OC_2H_4OCH_3$, $(CH_2)_3OC_2H_4OC_4H_9$, $(CH_2)_3OC_2H_4OC_6H_5$, 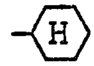, 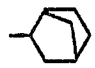, $CH_2C_6H_5$, $C_2H_4C_6H_5$, $CH_2\underset{CH_3}{\underset{|}{C}}HC_6H_5$, $C_6H_5$, $C_6H_4CH_3$, $C_6H_4OCH_3$, $C_6H_4OC_2H_4OH$ oder $(CH_2)_5COOH$ sowie die Reste mit $C_6H_4CH_3$ anstelle von $C_6H_5$. Reste $\underset{B^2}{\underset{|}{N}}-B^1$ sind beispielsweise auch: Pyrrolidino, Piperidino, Morpholino oder Hexamethylenimino.

Als Reste $B^2$ kommen im Rahmen der allgemeinen Definition die für $B^1$ genannten in Betracht.

Zur Herstellung der Verbindungen der Formel I kann man eine Diazoniumverbindung von Aminen der Formel

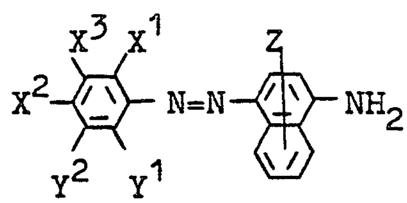

mit einer der Kupplungskomponenten der Formeln

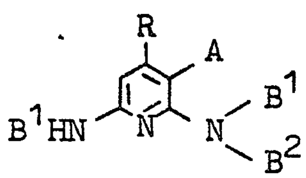 oder 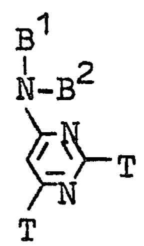

umsetzen.

Einzelheiten der Herstellung können den Beispielen entnommen werden, in denen sich Angaben über Teile und Prozente, sofern nicht anders vermerkt, auf das Gewicht beziehen.

Die Farbstoffe der Formel I können von ihrer Konstitution her als Dispersionsfarbstoffe bezeichnet werden, deren Application auf z. B. Baumwolle in der Regel nicht möglich ist. In der deutschen Patentschrift 1 811 796 ist jedoch ein Verfahren beschrieben, das den Druck auf Cellulose und cellulosehaltigem Textilmaterial ermöglicht. Die dort gemachten Angaben bezüglich der Verfahrensbedingungen gelten sinngemäß auch für die erfindungsgemäßen Farbstoffe. Weiterhin sind in den deutschen Offenlegungsschriften 25 24 243 und 25 28 743 sowie der Patentanmeldung P 2 855 188, 4 weitere Verfahren angegeben, nach denen die erfindungsgemäßen Farbstoffe appliziert werden können.

Man erhält mit den erfindungsgemäßen Farbstoffen Färbungen und Drucke mit vorzüglichen Echtheiten, von denen insbesondere die Naßechtheiten und teilweise auch die Lichtechtheiten zu nennen sind. Bei Drucken tritt z. B. bei der Wäsche kein Anbluten eines gegebenenfalls vorhandenen Weißfonds auf. Weiterhin ist die gute Farbtonübereinstimmung bei Mischgeweben aus Polyester und Baumwolle zu erwähnen.

Die blauen Farbstoffe der Formel I eignen sich zudem vorzüglich zur Herstellung von Schwarztönen oder Schwarzmischungen.

Von besonderer Bedeutung sind Farbstoffe der Formel II

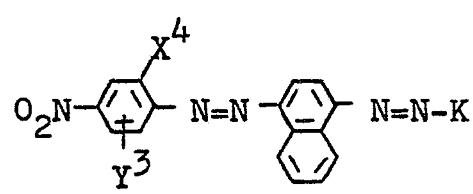

in der
K die Reste 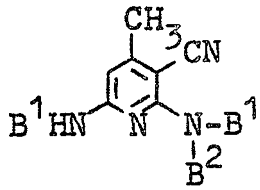, 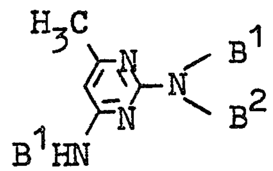 oder

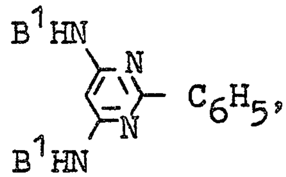,

$X^4$ Wasserstoff, Chlor, Brom, Methyl, Methoxy, Cyan, Methylsulfonyl, Phenylsulfonyl, Sulfonsäurephenylester oder Carbonsäureester mit insgesamt 2 bis 11 C-Atomen und

$Y^3$ Wasserstoff, Chlor, Brom, Methyl oder Methoxy bedeuten und $B^1$ und $B^2$ die angegebene Bedeutung haben.

Bevorzugt für $B^1$ sind unabhängig voneinander Wasserstoff, $C_1$- bis $C_8$-Alkyl, durch $C_1$- bis $C_8$-Alkoxy, Phenoxy, Tolyloxy, Cyclohexyloxy, Benzyloxy, ß-Phenyläthoxy, Carbonester mit insgesamt 2 bis 9 C-Atomen, C-Acyloxy mit insgesamt 1 bis 11 C-Atomen, $C_1$- bis $C_8$-Alkylaminocarbonyloxy, Phenylaminocarbonyloxy, Tolylaminocarbonyloxy-, Chlorphenylaminocarbonyloxy oder Pyrrolidonyl substituiertes $C_2$- bis $C_8$-Alkyl; Cyclohexyl, Norbornyl, Phenyl-$C_1$- bis $C_4$-alkyl, Tolyl-$C_1$- bis $C_4$-alkyl, ß-Phenyl-ß-hydroxyäthyl, gegebenenfalls durch Fluor, Chlor, Brom, Methyl, Trifluormethyl, Äthyl, Methoxy, Äthoxy oder Pyrrolidonyl substituiertes Phenyl oder $(CH_2)_3(OC_2H_4)_nOB$, wobei

n 1 oder 2,

B $C_1$- bis $C_4$-Alkyl, Cyclohexyl, Benzyl, Phenyläthyl, Phenyl oder Tolyl sind.

In den folgenden Beispielen ist jeweils für die Kupplungskomponenten mit ungleichen Substituenten in der 2- und 6-Stellung nur ein Isomeres angegeben; es ist dazu zu bemerken, daß das Isomere mit vertauschten 2- und 6-Substituenten in der Regel ebenfalls in den Kupplungskomponenten und damit den Farbstoffen enthalten ist.

Beispiel 1

54 Teile einer 20 %igen wässrigen Paste von 4-(2',6'-Dichlor-4'-nitro-phenylazo)-1-naphthylamin werden in 250 Raumteilen 100 %iger Essigsäure bei 10 °C angerührt. Zum Gemisch tropft man zunächst 10 Raumteile einer 3,33-normalen wässrigen Natriumnitritlösung und anschließend 7,5 Teile einer 98 %igen Schwefelsäure zu und rührt 2 bis 3 Stunden bei 15/20 °C nach.

Die durch Filtration von unlöslichen Anteilen befreite Lösung des Diazoniumsulfates läßt man sodann in ein Gemisch einfließen, daß in 250 Raumteilen 80 %iger Essigsäure 9,2 Teile 2,6-Bis-(γ-methoxy-propylamino)-3-cyan-4-methyl-pyridin und 25 Teile Natriumacetat gelöst enthält. Nach dem Rühren über Nacht unter Erwärmung auf Raumtemperatur wird der Farbstoff bei 80 °C abgesaugt, zunächst mit warmer Essigsäure, dann mit heißem Wasser gewaschen und bei 80 °C getrocknet. Man erhält ein blauschwarzes Pulver der Formel

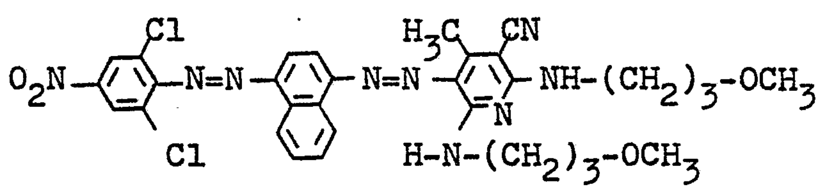 ,

das - durch Druck- oder Färbeverfahren auf Baumwolle, Polyester oder Gemische aus beiden appliziert - marineblaue bis schwarze Färbungen mit sehr guten Gebrauchsechtheiten liefert.

Beispiel 2

50 Teile einer 22 %igen wässrigen Paste von 4-(2'-Brom-4'-nitro-phenylazo)-1-naphthylamin werden in 500 Raumteilen 100 %iger Essigsäure intensiv verrührt. Zu dem Gemisch tropft man bei 10/15 °C 12 Raumteile einer 3,33 normalen wässrigen Natriumnitritlösung und rührt zwei Stunden nach. Die Suspension des Diazoniumacetates wird sodann nach den Angaben des Beispiels 1 auf 10 Teile 2,6-Bis-(γ-äthoxy-propylamino)-3-cyan-4-methylpyridin gekuppelt. Nach dem Absaugen, Trocknen und Mahlen erhält man ein blauschwarzes Pulver der Formel

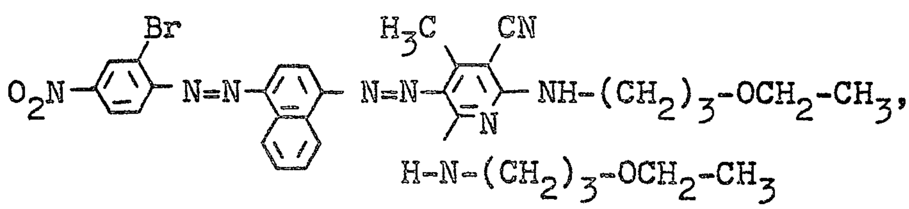

das sowohl Polyester- wie auch Baumwollematerial oder Gemische aus beiden in dunkelblauen bis schwarzen Tönen färbt.

Nach den Angaben der Beispiele 1 und 2 werden die folgenden Farbstoffe mit ähnlichen coloristischen Eigenschaften erhalten:

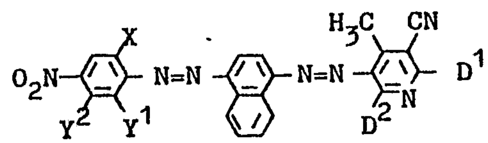

| Bsp. | X | $Y^1$ | $Y^2$ | $D^1$ | $D^2$ | Farbton auf PES/BW |
|---|---|---|---|---|---|---|
| 3 | Cl | Cl | H | $NH-(CH_2)_2-O-(CH_2)_3CH_3$ | $NH_2$ | rotst. M'-blau |
| 4 | Cl | Cl | H | $NH-(CH_2)_3-O-(CH_2)_2-O-$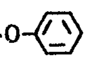 | $NH_2$ | " " |
| 5 | Cl | Cl | H | $NH-(CH_2)_2-OCH_3$ | $NH-(CH_2)_2-OCH_3$ | M'-blau |
| 6 | Cl | Cl | H | $NH-(CH_2)_2-O-(CH_2)_3CH_3$ | $NH-(CH_2)_2-O-(CH_2)_3CH_3$ | " |
| 7 | Cl | Cl | H | $NH-(CH_2)_3-O-(CH_2)_4-OH$ | $NH-(CH_2)_3-OCH_3$ | " |
| 8 | Cl | Cl | H | $NH-(CH_2)_3-OCH_2-CH_3$ | $NH-(CH_2)_3-O-CH_2-CH_3$ | " |
| 9 | Cl | Cl | H | $NH-(CH_2)_3-O-(CH_2)_3CH_3$ | $NH-(CH_2)_3-O-(CH_2)_3CH_3$ | " |
| 10 | Cl | Cl | H | $NH-(CH_2)_3-O-(CH_2)_2-OCH_3$ | $NH-(CH_2)_3-O-(CH_2)_2-OCH_3$ | " |
| 11 | Cl | Cl | H | $NH-(CH_2)_3-OCH_3$ | $NH-(CH_2)_3-O-(CH_2)_2-O-$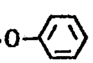 | " |

| Bsp. | X | $Y^1$ | $Y^2$ | $D^1$ | $D^2$ | Farbton auf PES/BW |
|---|---|---|---|---|---|---|
| 12 | Cl | Cl | H | $NH-(CH_2)_3-CH_3$ | $NH-(CH_2)_3-CH_3$ | M'-blau |
| 13 | Cl | Cl | H | $NH-(CH_2)_2-O-CH(CH_3)_2$ | $NH-(CH_2)_2-OCH(CH_3)_2$ | " |
| 14 | Cl | Cl | H | $NH-(CH_2)_2-$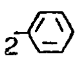 | $NH-(CH_2)_2-OCH_3$ | " |
| 15 | Cl | Cl | H | $NH-(CH_2)_3-O-(CH_2)_2-O-$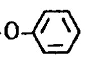 | $NH-(CH_2)_3-O-(CH_2)_2-O-$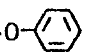 | " |
| 16 | Cl | Cl | H | $NH-CH_2-$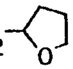 | $NH-CH_2-$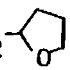 | " |
| 17 | Cl | Cl | H | NH-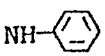 | $NH-(CH_2)_3-OCH_3$ | " |
| 18 | Cl | Cl | H | 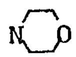 | $NH-(CH_2)_2-OCH_3$ | " |
| 19 | Cl | Cl | H | $N[(CH_2)_2-OCH_3]_2$ | " | " |
| 20 | Cl | Cl | H | $NH-(CH_2)_3-O-CH_2-CH_3$ | $NH_2$ | " |
| 21 | Cl | Br | H | $NH-(CH_2)_2-OCH_3$ | $NH-(CH_2)_2-OCH_3$ | " |
| 22 | Cl | Br | H | $NH-(CH_2)_2-O-(CH_2)_3CH_3$ | $NH-(CH_2)_2-O-(CH_2)_3CH_3$ | " |

| Bsp. | X | $Y^1$ | $Y^2$ | $D^1$ | $D^2$ | Farbton auf PES/BW |
|---|---|---|---|---|---|---|
| 23 | Cl | Br | H | $NH-(CH_2)_3-O-CH_2-CH_3$ | $NH-(CH_2)_3-O-CH_2-CH_3$ | M'-blau |
| 24 | Cl | Br | H | $NH-(CH_2)_3-OCH_3$ | $NH-(CH_2)_3-OCH_3$ | " |
| 25 | Cl | Br | H | $NH-(CH_2)_3-O-(CH_2)_4-OH$ | $NH-(CH_2)_3-OCH_3$ | " |
| 26 | Cl | Br | H | $NH-(CH_2)_3-O-(CH_2)_2-OCH_3$ | $NH-(CH_2)_3-O-(CH_2)_2-OCH_3$ | " |
| 27 | Cl | Br | H | $NH-(CH_2)_3-CH_3$ | $NH-(CH_2)_3-CH_3$ | " |
| 28 | Cl | Br | H | $NH-(CH_2)_2-O-(CH_2)_3-CH_3$ | $NH_2$ | " |
| 29 | Cl | Br | H | $NH-(CH_2)_3-O-CH_2-CH_3$ | $NH_2$ | " |
| 30 | Cl | Br | H | $NH-(CH_2)_3-O-(CH_2)_2-O-$ 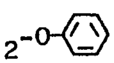 | $NH_2$ | " |
| 31 | Br | H | H | $NH-(CH_2)_2OCH_3$ | $NH-(CH_2)_2-OCH_3$ | " |
| 32 | Br | H | H | $NH-(CH_2)_2-O-(CH_2)_3-CH_3$ | $NH-(CH_2)_2-O-(CH_2)_3-CH_3$ | " |

| Bsp. | X | $Y^1$ | $Y^2$ | $D^1$ | $D^2$ | Farbton auf PES/BW |
|---|---|---|---|---|---|---|
| 33 | Br | H | H | $NH-(CH_2)_3-OCH_3$ | $NH-(CH_2)_3-OCH_3$ | M'-blau |
| 34 | Br | H | H | $NH-(CH_2)_3-O-(CH_2)_4-OH$ | $NH-(CH_2)_3-OCH_3$ | " |
| 35 | Br | H | H | $NH-(CH_2)_3-O-(CH_2)_3-CH_3$ | $NH-(CH_2)_3-O-(CH_2)_3-CH_3$ | " |
| 36 | Br | H | H | $NH-(CH_2)_3-OCH_3$ | $NH-(CH_2)_3-O-(CH_2)_2-O-$ 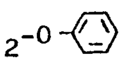 | " |
| 37 | Br | H | H | $NH-(CH_2)_3-O-(CH_2)_2-O-$ 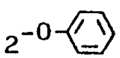 | " | " |
| 38 | Br | H | H | " | $NH_2$ | " |
| 39 | Br | H | H | $NH-(CH_2)_3-O-CH_2-CH_3$ | " | " |
| 40 | Br | H | H | $NH-(CH_2)_2-O-(CH_2)_3-CH_3$ | " | " |
| 41 | Br | H | H | 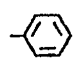 | " | " |
| 42 | Cl | H | H | $NH-(CH_2)_3-O-(CH_2)_2-O-$ 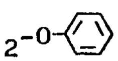 | " | " |
| 43 | Cl | H | H | $NH-(CH_2)_2-O-(CH_2)_3-CH_3$ | $NH-(CH_2)_2-O-(CH_2)_3-CH_3$ | " |

| Bsp. | X | $Y^1$ | $Y^2$ | $D^1$ | $D^2$ | Farbton auf PES/BW |
|---|---|---|---|---|---|---|
| 44 | Cl | H | H | $NH-(CH_2)_3-OCH_3$ | $NH-(CH_2)_3-OCH_3$ | M'-blau |
| 45 | Cl | H | H | $NH-(CH_2)_3-OCH_2-CH_3$ | $NH-(CH_2)_3-OCH_2-CH_3$ | " |
| 46 | Cl | H | H | $NH-(CH_2)_3-O-(CH_2)_2-O-$ 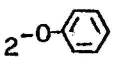 | $NH-(CH_2)_3-O-(CH_2)_2-O-$ 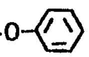 | " |
| 47 | H | H | H | $NH-(CH_2)_2-OCH_3$ | $NH-(CH_2)_2-OCH_3$ | " |
| 48 | H | H | H | $NH-(CH_2)_2-O-(CH_2)_3-CH_3$ | $NH-(CH_2)_2-O-(CH_2)_3-CH_3$ | " |
| 49 | H | H | H | $NH-(CH_2)_3-OCH_3$ | $NH-(CH_2)_3-OCH_3$ | " |
| 50 | H | H | H | $NH-(CH_2)_3-O-CH_2-CH_3$ | $NH-(CH_2)_3-O-CH_2-CH_3$ | " |
| 51 | H | H | H | $NH-(CH_2)_3-O-(CH_2)_4-OH$ | $NH-(CH_2)_3-OCH_3$ | " |
| 52 | H | H | H | $NH-(CH_2)_3-O-(CH_2)_2-O-$ 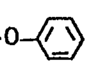 | $NH-(CH_2)_3-O-(CH_2)_2-O-$ 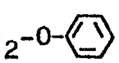 | " |
| 53 | H | H | H | $NH-(CH_2)_3-OCH_3$ | " | " |
| 54 | H | H | H | $NH-(CH_2)_3-O-(CH_2)_2-OCH_3$ | $NH-(CH_2)_3-O-(CH_2)_2-OCH_3$ | " |

| Bsp. | X | $Y^1$ | $Y^2$ | $D^1$ | $D^2$ | Farbton auf PES/BW |
|---|---|---|---|---|---|---|
| 55 | CN | H | H | $NH-(CH_2)_2-O-(CH_2)_3-CH_3$ | $NH-(CH_2)_2-O-(CH_2)_3-CH_3$ | grünst. Blau |
| 56 | CN | Br | H | " | " | M'-blau |
| 57 | CN | Br | H | $NH-(CH_2)_3-OCH_3$ | $NH-(CH_2)_3-OCH_3$ | " |
| 58 | CN | Br | H | $NH-(CH_2)_3-OCH_2-CH_3$ | $NH-(CH_2)_3-OCH_2-CH_3$ | " |
| 59 | $CH_3$ | H | Cl | $NH-(CH_2)_3-O-(CH_2)_2-O-$ 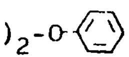 | $NH_2$ | " |
| 60 | $CH_3$ | H | Cl | $NH-(CH_2)_2-O-(CH_2)_3-CH_3$ | $NH-(CH_2)_2-O-(CH_2)_3-CH_3$ | " |
| 61 | $CH_3$ | H | Cl | $NH-(CH_2)_3-O-CH_2-CH_3$ | $NH-(CH_2)_3-O-CH_2-CH_3$ | " |
| 62 | $CH_3$ | Br | Cl | $NH-(CH_2)_2-OCH_3$ | $NH-(CH_2)_2-OCH_3$ | " |
| 63 | $CH_3$ | Br | Cl | $NH-(CH_2)_3-OCH_3$ | $NH-(CH_2)_3-OCH_3$ | " |
| 64 | $CH_3$ | Br | Cl | $NH-(CH_2)_3-O-(CH_2)_4-OH$ | $NH-(CH_2)_3-OCH_3$ | " |
| 65 | $CH_3$ | Br | Cl | $NH-(CH_2)_2-O-(CH_2)_3-CH_3$ | $NH-(CH_2)_2-O-(CH_2)_3-CH_3$ | " |

| Bsp. | X | $Y^1$ | $Y^2$ | $D^1$ | $D^2$ | Farbton auf PES/BW |
|---|---|---|---|---|---|---|
| 66 | $CH_3$ | Br | Cl | $NH-(CH_2)_3-O-CH_2-CH_3$ | $NH-(CH_2)_3-O-CH_2-CH_3$ | M'-blau |
| 67 | $CH_3$ | Br | Cl | $NH-(CH_2)_3-O-(CH_2)_2-O-$ 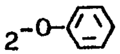 | $NH_2$ | " |
| 68 | $OCH_3$ | H | H | $NH-(CH_2)_2-O-(CH_2)_3-CH_3$ | $NH-(CH_2)_2-O-(CH_2)_3-CH_3$ | Blau |
| 69 | $OCH_3$ | H | H | $NH-(CH_2)_3-O-CH_2-CH_3$ | $NH-(CH_2)_3-O-(CH_2)_3-CH_3$ | " |
| 70 | $OCH_3$ | H | H | $NH-(CH_2)_2-OCH_3$ | $NH-(CH_2)_2-OCH_3$ | " |
| 71 | $OCH_3$ | H | H | $NH-(CH_2)_3-OCH_3$ | $NH-(CH_2)_3-OCH_3$ | " |
| 72 | $OCH_3$ | H | $OCH_3$ | $NH-(CH_2)_2-O-(CH_2)_3-CH_3$ | $NH-(CH_2)_2-O-(CH_2)_3-CH_3$ | M'-blau |
| 73 | $OCH_3$ | H | $OCH_3$ | $NH-(CH_2)_3-O-CH_2-CH_3$ | $NH-(CH_2)_2-O-CH_2-CH_3$ | " |
| 74 | $OCH_3$ | H | $OCH_3$ | $NH-(CH_2)_3-O-(CH_2)_2-O-$ 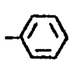 | $NH-(CH_2)_3-OCH_3$ | " |
| 75 | $OCH_3$ | H | $OCH_3$ | " | $NH_2$ | " |
| 76 | $OCH_3$ | Br | $OCH_3$ | $NH-(CH_2)_3-OCH_3$ | $NH-(CH_2)_3-OCH_3$ | rotst. Blau |

| Bsp. | X | $Y^1$ | $Y^2$ | $D^1$ | $D^2$ | Farbton auf PES/BW |
|---|---|---|---|---|---|---|
| 77 | $OCH_3$ | Br | $OCH_3$ | $NH-(CH_2)_3-OCH_2-CH_3$ | $NH-(CH_2)_3-O-CH_2-CH_3$ | rotst. Blau |
| 78 | $OCH_3$ | Br | $OCH_3$ | $NH-(CH_2)_3-CH_3$ | $NH-(CH_2)_3-CH_3$ | " |
| 79 | $CH_3$ | H | H | $NH-(CH_2)_2-OCH_3$ | $NH-(CH_2)_2-OCH_3$ | Blau |
| 80 | $CH_3$ | H | H | $NH-(CH_2)_3-OCH_3$ | $NH-(CH_2)_3-OCH_3$ | " |
| 80a | $CH_3$ | H | H | $NH-(CH_2)_3-O-(CH_2)_4-OH$ | $NH-(CH_2)_3-OCH_3$ | " |
| 81 | Br | $CH_3$ | H | $NH-(CH_2)_3-OCH_3$ | $NH-(CH_2)_3-OCH_3$ | " |
| 82 | Br | $CH_3$ | H | $NH-(CH_2)_3-OCH_2-CH_3$ | $NH-(CH_2)_3-OCH_2-CH_3$ | " |
| 83 | $SO_2-CH_2-CH_3$ | H | H | $NH-(CH_2)_3-O-(CH_2)_2-O-$ 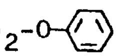 | $NH_2$ | " |
| 84 | " | H | H | " | $NH-(CH_2)_3-O-(CH_2)_2-O-$ 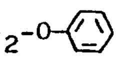 | " |
| 85 | " | H | H | $NH-(CH_2)_3-OCH_3$ | " | " |
| 85a | " | H | H | " | $NH-(CH_2)_3-OCH_3$ | " |
| 86 | " | Br | H | $NH-(CH_2)_3-O-(CH_2)_2-O-$ 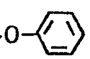 | $NH_2$ | " |
| 87 | " | Br | H | $NH-(CH_2)_2-O-(CH_2)_3-CH_3$ | $NH-(CH_2)_2-O-(CH_2)_3-CH_3$ | " |

| Bsp. | X | $Y^1$ | $Y^2$ | $D^1$ | $D^2$ | Farbton auf PES/BW |
|---|---|---|---|---|---|---|
| 88 | $SO_2-CH_2-CH_3$ | Br | H | $NH-(CH_2)_3-OCH_3$ | $NH-(CH_2)_3-OCH_3$ | M'-blau |
| 89 | " | Br | H | $NH-(CH_2)_3-OCH_2-CH_3$ | $NH-(CH_2)_3-OCH_2-CH_3$ | " |
| 90 | " | Br | H | $NH-(CH_2)_3-O-(CH_2)_2-O-$ 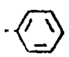 | $NH-(CH_2)_3-O-(CH_2)_2-O-$ 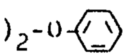 | " |
| 91 | " | Br | H | $NH-(CH_2)_3-OCH_3$ | " | " |
| 92 | $CO_2-(CH_2)_2-O-$ 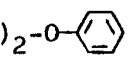 | H | H | $NH-(CH_2)_3-O-(CH_2)_2-O-$ 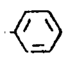 | $NH_2$ | " |
| 93 | " | H | H | " | $NH-(CH_2)_3-O-(CH_2)_2-O$ 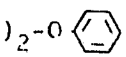 | " |
| 94 | " | H | H | $NH-(CH_2)_3-O-CH_2-CH_3$ | $NH-(CH_2)_3-O-CH_2-CH_3$ | " |
| 95 | " | H | H | $NH-(CH_2)_2-O-(CH_2)_3-CH_3$ | $NH-(CH_2)_2-O-(CH_2)_3-CH_3$ | " |
| 96 | $CO_2-C_2H_4OCH_3$ | Br | H | $NH-(CH_2)_2-O-(CH_2)_3-CH_3$ | $NH-(CH_2)_2-O-(CH_2)_3-CH_3$ | " |
| 97 | " | Br | H | $NH-(CH_2)_3-O-CH_2-CH_3$ | $NH-(CH_2)_3-O-CH_2-CH_3$ | " |
| 98 | $SO_3-$ 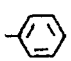 | H | H | $NH-(CH_2)_2-O-(CH_2)_3-CH_3$ | $NH-(CH_2)_2-O-(CH_2)_3-CH_3$ | grünst. Blau |

| Bsp. | X | $Y^1$ | $Y^2$ | $D^1$ | $D^2$ | Farbton auf PES/BW |
|---|---|---|---|---|---|---|
| 99 | $SO_3$- 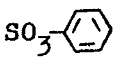 | H | H | $NH-(CH_2)_3-O-CH_2-CH_3$ | $NH-(CH_2)_3-O-CH_2-CH_3$ | grünst. Blau |
| 100 | $SO_2-N(C_2H_5)_2$ | Br | H | $NH-(CH_2)_2-O-(CH_2)_3-CH_3$ | $NH-(CH_2)_2-O-(CH_2)_3-CH_4$ | M.blau |
| 101 | " | Br | H | $NH-(CH_2)_3-O-CH_2-CH_3$ | $NH-(CH_2)_3-O-CH_2-CH_3$ | " |
| 102 | $OCH_3$ | Br | H | $NH-(CH_2)_3-OCH_3$ | $NH-(CH_2)_3-OCH_3$ | " |
| 103 | " | Br | H | $NH-(CH_2)_3-O-CH_2-CH_3$ | $NH-(CH_2)_3-O-CH_2-CH_3$ | " |

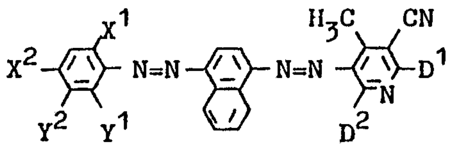

| Bsp. | $X^1$ | $X^2$ | $Y^2$ | $Y^1$ | $D^1$ | $D^2$ | Farbton auf PES/BW |
|---|---|---|---|---|---|---|---|
| 104 | $NO_2$ | Br | H | Br | $NH-(CH_2)_2-O-(CH_2)_3-CH_3$ | $NH-(CH_2)_2-O-(CH_2)_3-CH_3$ | M'-blau |
| 105 | " | Br | H | Br | $NH-(CH_2)_3-OCH_3$ | $NH-(CH_2)_3-OCH_3$ | " |
| 106 | " | Br | H | Br | $NH-(CH_2)_3-OCH_2-CH_3$ | $NH-(CH_2)_3-OCH_2-CH_3$ | " |
| 107 | " | Br | H | Br | $NH-(CH_2)_3-O-(CH_2)_2-O-$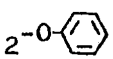 | $NH_2$ | " |
| 108 | Br | Br | $NO_2$ | Br | $NH-(CH_2)_3-OCH_3$ | $NH-(CH_2)_3-O-(CH_2)_2-O-$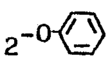 | rotst. Blau |
| 109 | Br | Br | $NO_2$ | Br | $NH-(CH_2)_3-OCH_3$ | $NH-(CH_2)_3-OCH_3$ | rotst. Blau |
| 110 | Br | Br | $NO_2$ | Br | $NH-(CH_2)_3-OCH_2-CH_3$ | $NH-(CH_2)_3-OCH_2-CH_3$ | " |
| 111 | Br | Br | $NO_2$ | Br | $NH-(CH_2)_3-O-(CH_2)_2-OCH_3$ | $NH-(CH_2)_3-O-(CH_2)_2-OCH_3$ | " |
| 112 | $NO_2$ | $CO_2(CH_2)_3CH_3$ | H | H | $NH-(CH_2)_2-O-(CH_2)_3-CH_3$ | $NH-(CH_2)_2-O-(CH_2)_3-CH_3$ | grünst. bl. |

| Bsp. | $X^1$ | $X^2$ | $Y^2$ | $Y^1$ | $D^1$ | $D^2$ | Farbton auf PES/BW |
|---|---|---|---|---|---|---|---|
| 113 | $NO_2$ | $CO_2(CH_2)_3CH_3$ | H | H | $NH-(CH_2)_3-OCH_3$ | $NH-(CH_2)_3-OCH_3$ | grünst. bl. |
| 114 | " | " | H | H | $NH-(CH_2)_3-OCH_2-CH_3$ | $NH-(CH_2)_3-O-CH_2-CH_3$ | " |
| 115 | " | $CH_3$ | H | Br | $NH-(CH_2)_2-OCH_3$ | $NH-(CH_2)_2-OCH_3$ | M.-blau |
| 116 | " | " | H | Br | $NH-(CH_2)_2-O-(CH_2)_3-CH_3$ | $NH-(CH_2)_2-O-(CH_2)_3-CH_3$ | " |
| 117 | " | " | H | Br | $NH-(CH_2)_3-OCH_3$ | $NH-(CH_2)_3-OCH_3$ | " |
| 118 | " | " | H | Br | $NH-(CH_2)_3-O-(CH_2)_4-OH$ | $NH-(CH_2)_3-OCH_3$ | " |
| 119 | " | $OCH_3$ | H | Br | $NH-(CH_2)_2-O-(CH_2)_3-CH_3$ | $NH-(CH_2)_2-O-(CH_2)_3-CH_3$ | " |
| 120 | " | " | H | Br | $NH-(CH_2)_3-O-CH_2-CH_3$ | $NH-(CH_2)_3-O-CH_2-CH_3$ | " |
| 121 | $SO_3-$ 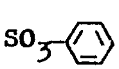 | $SO_3-$ 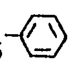 | H | H | $NH-(CH_2)_2-O-(CH_2)_3-CH_3$ | $NH-(CH_2)_2-O-(CH_2)_3-CH_3$ | Blau |

| Bsp. | $X^1$ | $X^2$ | $Y^2$ | $Y^1$ | $D^1$ | $D^2$ | Farbton auf PES/BW |
|---|---|---|---|---|---|---|---|
| 122 | $SO_3$- 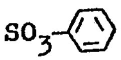 | $SO_3$- 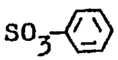 | H | H | $NH-(CH_2)_3-O-CH_2-CH_3$ | $NH-(CH_2)_3-O-CH_2-CH_3$ | Blau |
| 123 | $CO_2$- 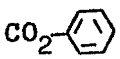 | $SO_3$- 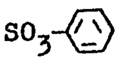 | H | H | $NH-(CH_2)_3-O-CH_2-CH_3$ | $NH-(CH_2)_3-O-CH_2-CH_3$ | " |
| 124 | " | " | H | H | $NH-(CH_2)_3-O-(CH_2)_2-O$- 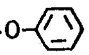 | $NH-(CH_2)_3-O-(CH_2)_2-O$- 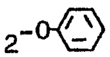 | " |
| 125 | $SO_2-N(C_2H_5)_2$ | $SO_2-N(C_2H_5)_2$ | H | H | $NH-(CH_2)_3-O-(CH_2)_2-O$- 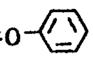 | " | " |
| 126 | " | " | H | H | $NH-(CH_2)_2$- 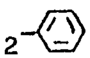 | $NH-(CH_2)_2$- 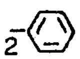 | " |
| 127 | H | H | 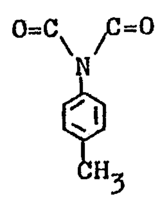 | | $NH-(CH_2)_3-O-(CH_2)_2-O$- 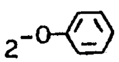 | $NH-(CH_2)_3-OCH_3$ | M-blau |
| 128 | H | H | | " | $NH-(CH_2)_3-O-CH_2-CH_3$ | $NH-(CH_2)_3-O-CH_2-CH_3$ | " |

| Bsp. | $X^1$ | $X^2$ | $Y^2$ | $Y^1$ | $D^1$ | $D^2$ | Farbton auf PES/BW |
|---|---|---|---|---|---|---|---|
| 129 | H | 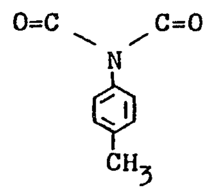 | | H | $NH-(CH_2)_3-O-CH_2-CH_3$ | $NH-(CH_2)_3-O-CH_2-CH_3$ | M.-Blau |
| 130 | H | " | | H | $NH-(CH_2)_3-O-(CH_2)_2-O-$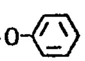 | $NH-(CH_2)_3-OCH_3$ | " |

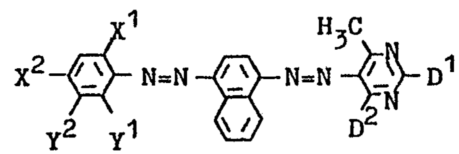

| Bsp. | $X^1$ | $X^2$ | $Y^2$ | $Y^1$ | $D^1$ | $D^2$ | Farbton auf PES/BW |
|---|---|---|---|---|---|---|---|
| 131 | Cl | $NO_2$ | H | Cl | N $(CH_2)_3-CH_3$<br>$(CH_2)_3-CH_3$ | $NH-(CH_2)_2-OCH_3$ | M.-Blau |
| 132 | Cl | $NO_2$ | H | Cl | " | $NH-(CH_2)_3-OCH_3$ | " |
| 133 | Cl | $NO_2$ | H | Cl | " | $NH-(CH_2)_3-O-(CH_2)_2-OCH_3$ | " |
| 134 | Br | $NO_2$ | H | H | " | $NH-(CH_2)_3-O-CH_2-CH_3$ | " |
| 135 | $OCH_3$ | $NO_2$ | H | Br | " | $NH-(CH_2)_3-OCH_3$ | " |
| 136 | " | $NO_2$ | H | H | " | " | blau |
| 137 | $CO_2(CH_2)_2-O$ 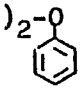 | $NO_2$ | H | H | " | " | " |
| 138 | $CO_2$ 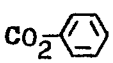 | $NO_2$ | H | H | " | $NH-(CH_2)_3-OCH_3$ | blau |

| Bsp. | $X^1$ | $X^2$ | $Y^2$ | $Y^1$ | $D^1$ | $D^2$ | Farbton auf PES/BW |
|---|---|---|---|---|---|---|---|
| 139 | $NO_2$ | Br | H | Br | 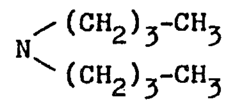 | $NH-(CH_2)_3-OCH_3$ | blau |
| 140 | Cl | $NO_2$ | H | Cl | 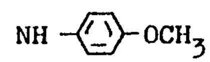 | " | M.-blau |

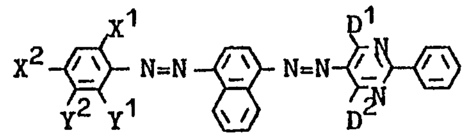

| Bsp. | $X^1$ | $X^2$ | $Y^2$ | $Y^1$ | $D^1$ | $D^2$ | Farbton auf PES/BW |
|---|---|---|---|---|---|---|---|
| 141 | Cl | $NO_2$ | H | Cl | $NH-(CH_2)_3-OCH_3$ | $NH-(CH_2)_3-OCH_3$ | M.-blau |
| 142 | Cl | $NO_2$ | H | Cl | " | $NH-CH_2-$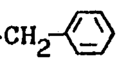 | " |
| 143 | Cl | $NO_2$ | H | Br | " | " | " |
| 144 | $CH_3$ | $NO_2$ | Cl | Br | " | $NH-(CH_2)_3-OCH_3$ | " |
| 145 | " | $NO_2$ | Cl | Br | $NH-(CH_2)_2-O-(CH_2)_3-CH_3$ | $NH-(CH_2)_2-O-(CH_2)_3-CH_3$ | " |
| 146 | $OCH_3$ | $NO_2$ | H | Br | $NH-(CH_2)_3-OCH_3$ | $NH-CH_2-$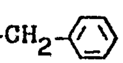 | " |
| 147 | Br | Br | $NO_2$ | Br | $NH-(CH_2)_3-OCH_3$ | $NH-(CH_2)_3-OCH_3$ | " |

| Bsp. | $X^1$ | $X^2$ | $Y^2$ | $Y^1$ | $D^1$ | $D^2$ | Farbton auf PES/BW |
|---|---|---|---|---|---|---|---|
| 148 | $SO_2C_2H_5$ | $NO_2$ | H | Br | $NH-(CH_2)_3-OCH_3$ | $NH-(CH_2)_3-OCH_3$ | blau |
| 149 | Br | $NO_2$ | H | H | $NH_2$ | $NH-(CH_2)_3-O-(CH_2)_2-O-$ 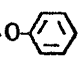 | M.-blau |
| 150 | $CH_3$ | $NO_2$ | Cl | H | $NH_2$ | " | " |
| 151 | Cl | $NO_2$ | H | Cl | $NH-(CH_2)_3-OCH_3$ | NH- 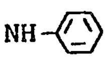 | " |

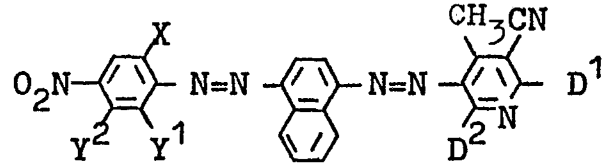

| Bsp. | X | $Y^1$ | $Y^2$ | $D^1$ | $D^2$ | Farbton |
|---|---|---|---|---|---|---|
| 152 | Cl | H | H | NH-$(CH_2)_3OCH_3$ | 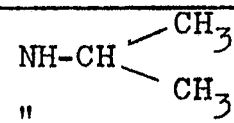 | M'-blau |
| 153 | Br | " | " | " | " | " |
| 154 | Cl | Cl | " | " | " | " |
| 155 | $OCH_3$ | H | H | " | " | " |
| 156 | Cl | H | H | NH-$(CH_2)_3OCH_3$ | NH-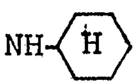 | " |
| 157 | Br | " | " | " | " | " |
| 158 | Cl | Cl | " | " | " | " |
| 159 | $OCH_3$ | H | H | " | " | " |
| 160 | Cl | " | " | NH-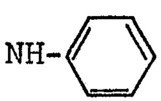-$OCH_3$ | NH-$CH(CH_3)_2$ | " |
| 161 | Br | " | " | " | " | " |
| 162 | $OCH_3$ | " | " | " | " | " |

| Bsp. | X | $Y^1$ | $Y^2$ | $D^1$ | $D^2$ | Farbton |
|---|---|---|---|---|---|---|
| 163 | Cl | H | H | 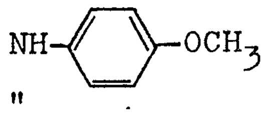 | $NH(CH_2)_3OCH_3$ | M'blau |
| 164 | Br | " | " | " | " | " |
| 165 | $OCH_3$ | " | " | " | " | " |
| 166 | $CH_3$ | " | " | " | " | " |

Patentansprüche

1. Disazofarbstoffe mit heterocyclischen Kupplungskomponenten der allgemeinen Formel

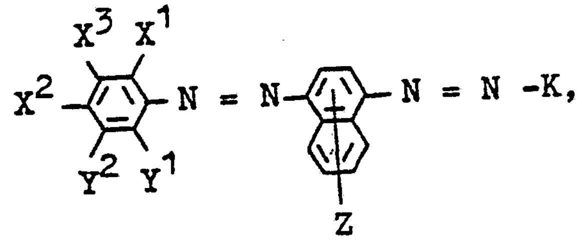

in der K ein Rest der Formel

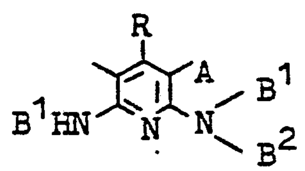

oder

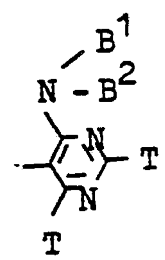

ist,
einer der Reste $X^1$ und $X^2$ Nitro, Methylsulfonyl, Äthylsulfonyl, gegebenenfalls substituiertes Carbamoyl oder Sulfamoyl, Carbonester oder einen gegebenenfalls substituierten Sulfonsäurephenylesterrest, der andere der Reste $X^1$ und $X^2$ Wasserstoff, Fluor, Chlor, Brom, Methyl, Trifluormethyl, Methoxy, Nitro oder Cyan,
$X^3$ Wasserstoff oder zusammen mit $X^1$ oder $X^2$ einen Rest der Formel

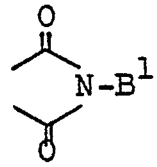 ,

Z Wasserstoff, Methyl, Äthyl, Methoxy, Äthoxy, Chlor oder Brom,
$Y^1$ Wasserstoff, Chlor, Brom, Methyl oder Cyan,

$Y^2$ Wasserstoff, Chlor, Brom oder Methoxy,
A Cyan oder Carbamoyl,
R Wasserstoff oder $C_1$- bis $C_3$-Alkyl, die Reste
$B^1$ unabhängig von einander Wasserstoff oder einen aliphatischen, cycloaliphatischen, araliphatischen oder aromatischen Rest,
$B^2$ Wasserstoff oder gegebenenfalls substituiertes Alkyl und
$B^1$ und $B^2$ zusammen mit dem Stickstoff einen gesättigten 5- bis 7-Ring, einer der Reste T einen Rest der Formel $-\underset{B^2}{\underset{|}{N}}-B^1$ und der andere Rest T Wasserstoff $C_1$- bis $C_3$-Alkyl oder Phenyl bedeuten.

2. Farbstoffe gemäß Anspruch 1 der allgemeinen Formel

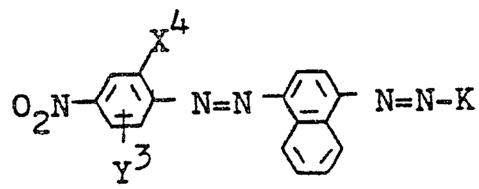

in der
K die Reste 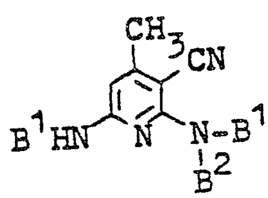 , 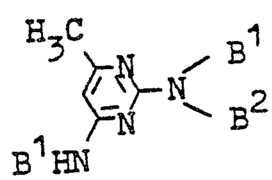 oder

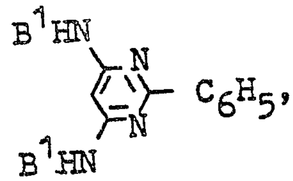

$X^4$ Wasserstoff, Chlor, Brom, Methyl, Methoxy, Cyan, Methylsulfonyl, Phenylsulfonyl, Sulfonsäurephenylester oder Carbonsäureester mit insgesamt 2 bis 11 C-Atomen und

$Y^3$ Wasserstoff, Chlor, Brom, Methyl oder Methoxy bedeuten und $B^1$ und $B^2$ die angegebene Bedeutung haben.

3. Farbstoffe gemäß Anspruch 1 der allgemeinen Formel

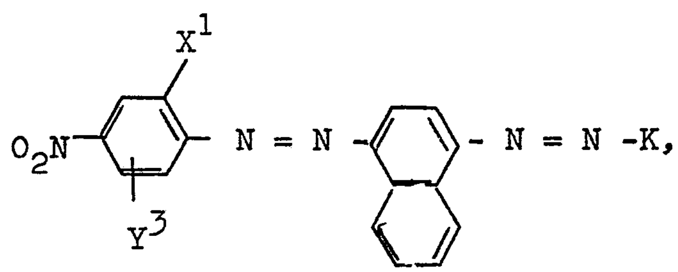

in der

K die Reste

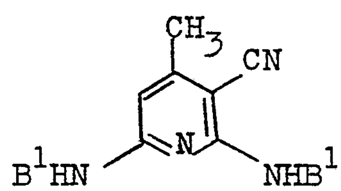
,
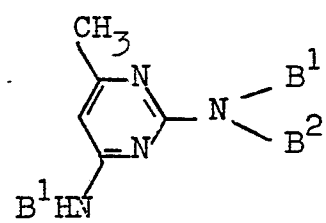
oder

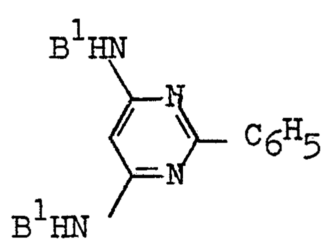
,

$X^1$ Chlor, Brom, Methyl oder Methoxy,

$Y^3$ Wasserstoff, Chlor, Brom, Methyl oder Methoxy,

die Reste

$B^1$ unabhängig voneinander Wasserstoff, $C_1$- bis $C_8$-Alkyl, Allyl, durch $C_1$- bis $C_4$-Alkoxy, Phenoxy, Phenoxyäthoxy oder Benzyloxy substituiertes

$C_2$- oder $C_3$-Alkyl, Cyclohexyl, Benzyl, Phenyläthyl, Phenylpropyl oder gegebenenfalls durch Methyl, Trifluormethyl, Methoxy oder Äthoxy substituiertes Phenyl,

$B^2$ Wasserstoff oder gegebenenfalls substituiertes Alkyl und

$B^1$ und $B^2$ zusammen mit dem Stickstoff einen gesättigten 5- oder 6-Ring bedeuten.

4. Verwendung von Farbstoffe gemäß Anspruch 1 oder 2 zum Färben von cellulosehaltigem Textilmaterial.

0023309

Europäisches Patentamt

# EUROPÄISCHER RECHERCHENBERICHT

Nummer der Anmeldung
EP 80 10 4093

| EINSCHLÄGIGE DOKUMENTE | | | KLASSIFIKATION DER ANMELDUNG (Int. Cl. 3) |
|---|---|---|---|
| Kategorie | Kennzeichnung des Dokuments mit Angabe, soweit erforderlich, der maßgeblichen Teile | betrifft Anspruch | |
| X | DE - A - 2 718 619 (BASF)<br>* Seiten 1,2, Anspruch 1; Seite 3, Anspruch 5 *<br>-- | 1,4 | C 09 B 31/14<br>D 06 P 1/18<br>D 06 P 3/60<br>3/85 |
| | FR - A - 2 206 357 (BASF)<br>* Seite 1, Zeilen 1-35; Seite 4, Zeilen 32-33 *<br>-- | 1 | |
| A | DE - A - 2 715 984 (BASF)<br>* Seiten 1,2; ganz *<br>---- | 1,4 | |

RECHERCHIERTE SACHGEBIETE (Int. Cl.3)

C 09 B 31/14
C 09 B 31/00 - 31/02

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 30-10-1980 | GREEN |